# EUROPÄISCHE PATENTANMELDUNG

(11) **EP 1 120 761 A2**
(43) Veröffentlichungstag der Anmeldung: **01.08.2001**
(21) Anmeldenummer: 01101377.8
(22) Anmeldetag: 22.01.2001
(51) Int. Cl.: G07F 19/00

(54) **Zahlungsausführungsvorrichtung zur bargeldlosen Zahlung und Verfahren zur Ausführung einer bargeldlosen Zahlung**

(30) Priorität: 28.01.2000 DE 10003875
(71) Anmelder: KommConsult Datenverarbeitung GmbH, 82024 Taufkirchen (DE)
(72) Erfinder: Adolph, Kai, 82008 Unterhaching (DE); Adolph, Oliver, 82024 Taufkirchen (DE)
(74) Vertreter: Ganahl, Bernhard

(57) **Zusammenfassung**

Die Erfindung betrifft eine Zahlungsausführungsvorrichtung zur bargeldlosen Zahlung und ein Verfahren zum Ausführen einer bargeldlosen Zahlung.

Durch die Erfindung wird eine Schnittstelle an der Zahlungsausführungsvorrichtung, die in der Regel eine Registrierkasse ist, vorgesehen, über die eine Datenverbindung zu einem Mobiltelefon hergestellt werden kann. Diese Datenverbindung ist unabhängig vom Telefonnetzwerk des Mobiltelefons. Über diese Datenverbindung erfolgt die Zahlungsaufforderung und/oder die Zahlungsbestätigung, wodurch der Benutzer des Mobiltelefons die Zahlung lediglich durch eine entsprechende Bestätigung am Mobiltelefon veranlassen kann.

## Beschreibung

Die Erfindung betrifft eine Zahlungsausführungsvorrichtung zur bargeldlosen Zahlung und ein Verfahren zum Ausführen einer bargeldlosen Zahlung.

Bekannte Zahlungsausführungsvorrichtungen sind Registrierkassen, an welchen durch manuelle Eingabe eines zu zahlenden Betrages, manuelle Eingabe einer Bestätigung und Ausdruck einer entsprechenden Quittung sowie Ablegen des entsprechenden Bargeldes in eine dafür vorgesehene Schublade eine Zahlung ausgeführt werden kann.

Weiterhin sind Zahlungsausführungsvorrichtungen in Form von Kreditkartenlesegeräten bekannt, die eine Kreditkarte lesen können. Diese Kreditkartenlesegeräte sind in der Regel mit einer Abrechnungsstelle verbunden, an welche die auf der Kreditkarte gespeicherten Informationen gesandt werden, woraufhin die Abrechnungsstelle die Kreditwürdigkeit der Person prüft, der diese Informationen zugeordnet sind, und eine entsprechende Autorisierungsnachricht an das Kreditkartenlesegerät sendet. Enthält die Autorisierungsnachricht die Information, daß die entsprechende Person kreditwürdig ist, so wird die Zahlung ausgeführt, ansonsten wird die Zahlung verweigert.

Im Sinne der vorliegenden Patentanmeldung bedeutet die Ausführung einer Zahlung daß die Zahlung durch eine Abrechnungsstelle, durch einen Kunden oder eine beliebige andere Person oder Gesellschaft bestätigt wird, ohne daß hierbei der Zahlungsvorgang physikalisch ausgeführt oder verbucht werden muß. Es muß lediglich der Kauf zwischen dem Käufer und Verkäufer abgeschlossen sein und es muß feststehen, mit welcher Person oder Organisation die Geldschuld verbucht werden kann.

Bei den Kreditkartenlesegeräten ist es z.B. üblich, die Verbuchung des Zahlungsvorganges mit der Kreditkartengesellschaft z.B. erst nach Geschäftsschluß vorzunehmen, indem alle Kreditkartengeschäfte des entsprechenden Tages in Form einer einzigen Datei an die Kreditkartengesellschaft gesandt werden, die eine entsprechende Buchungsbestätigung zurücksendet.

Die Autorisierung von Kreditkartenzahlungen an ein Kreditkartenlesegerät kann auch offline anhand von im Kreditkartenlesegerät hinterlegten Sperrlisten erfolgen, in welchen angegeben ist, welche Kreditkarten nicht kreditwürdig sind.

Weitere bekannte Zahlungsausführungsvorrichtungen sind Lesegeräte für Scheckkarten, die oftmals eine Datenverbindung zu einer Registrierkasse aufweisen, so daß der an der Registrierkasse eingegebene Betrag an das Lesegerät übermittelt wird, und der Scheckkarteninhaber mittels einer Geheimzahl (PIN) die Zahlung bestätigt. Hierauf erfolgt wiederum eine Autorisierung der Zahlung.

Ferner sind Lesegeräte zum Lesen von Geldkarten bekannt, auf welchen ein Benutzer einen bestimmten Geldwert, den er vorab an eine Geldkartengesellschaft entrichtet, abspeichern kann. Ist der Geldwert größer als der zu zahlende Betrag, so vermindert das Geldkartenlesegerät bei einer Zahlung den abgespeicherten Geldwert um den zu zahlenden Geldbetrag, der dann später gegenüber der Geldkartengesellschaft abgebucht wird. Da der Benutzer vorab das Geld bereits entrichtet hat, sind bei diesem Zahlungsvorgang keine benutzerspezifischen Kontrollen notwendig. Es wird lediglich geprüft, ob die Geldkarte an sich gefälscht ist.

Im Zuge der stark fortschreitenden Entwicklungen rund um das Internet ist es auch beabsichtigt, Mobiltelefone derart auszurüsten, daß mit diesen Internetzahlungen ausgeführt werden können. Hierzu werden die Mobiltelefone mit speziellen kryptografischen Codiermechanismen ausgestattet, mit welchen eine rechtsverbindliche digitale Signatur abgegeben werden kann. Diese kryptografischen Verfahren arbeiten mit geheimen Schlüsseln oder mit öffentlichen Schlüsseln (public key).

Mit diesen Mobiltelefonen kann man über das Telefonnetz eine Verbindung zum Internet herstellen, über das man beispielsweise in Verbindung mit einem Anbieter tritt. Nimmt man dessen Angebot an, so bestätigt man einen Kauf durch seine digitale Signatur, woraufhin ein juristisch gültiger Kauf abgeschlossen ist. Dieser Kauf beinhaltet auch die Ausführung eines entsprechenden Zahlungsvorganges, der über das Internet beispielsweise mit einer Kreditkartenzahlfunktion erfolgt. Zur Standardisierung dieses sogenannten mobilen elektronischen Kommerzes haben sich Firmen zu einem Konsortium, der BROKAT Infosystems AG, zusammen geschlossen.

Ferner ist es bekannt, Mobiltelefone mit einer vom Telefonnetz unabhängigen Schnittstelle für die Datenübertragung zu versehen, mit welchen z.B. die im Telefon gespeicherten Telefonnummern auf einem Computer übertragen und dort dauerhaft gespeichert werden können. Diese Schnittstellen sind typischerweise Infrarot-Schnittstellen, die mittels eines Infrarotsenders und eines Infrarotempfängers eine Datenkommunikation zu einem anderen Gerät mit einer entsprechenden Schnittstelle herstellen können. Es sind auch Funkschnittstellen bekannt, die auf einer von der Frequenz des Telefonnetzes abweichenden Funkfrequenz eine Funkverbindung zu einem weiteren Gerät, das eine entsprechende Schnittstelle aufweist, herstellen können. Im Bereich der Mobiltelefone tätige Firmen haben sich zu einer Interrest-Group zusammen geschlossen und einen Standard für die sogenannte Bluetooth-Schnittstelle festgelegt, mit welchen eine Funkverbindung von einem Mobiltelefon zu einem anderen Mobiltelefon oder zu einem beliebigen anderen Gerät zum Übertragen von Daten hergestellt werden kann.

Der Erfindung liegt die Aufgabe zugrunde, eine Zahlungsausführungsvorrichtung und ein Verfahren zum Ausführen einer Zahlung zu schaffen, mit welchen eine bargeldlose Zahlung sicherer als mit den bekannten Zahlungsausführungsvorrichtungen zur bargeldlosen Zahlung bzw. mit den bekannten Verfahren zum Ausführen einer bargeldlosen Zahlung erfolgen kann.

Die Aufgabe wird durch eine Zahlungsausführungsvorrichtung mit den Merkmalen des Anspruchs 1 und durch ein Verfahren mit den Merkmalen des Anspruchs 9 gelöst.

Die erfindungsgemäße Zahlungsausführungsvorrichtung zur bargeldlosen Zahlung weist eine Einrichtung zum Zwischenspeichern von Zahlungsinformationen und eine Schnittstelle zur Kommunikation mit einem Mobiltelefon auf, wobei über die Kommunikation mit dem Mobiltelefon ein Zahlungsvorgang auf Grundlage der gespeicherten Zahlungsinformationen ausgeführt werden kann.

Durch das Vorsehen einer derartigen Schnittstelle an der Zahlungsausführungsvorrichtung kann am Mobiltelefon eine Zahlung bestätigt werden und alle zahlungsrelevanten Daten vom Mobiltelefon an die Zahlungsausführungsvorrichtung übertragen werden. Hierbei ist es nicht notwendig, daß der Benutzer des Mobiltelefons, der die Zahlung bestätigt, irgendeine physikalische Einheit, wie z.B. eine Kreditkarte, Geldkarte oder dergleichen an den Kaufpartner übergibt, so daß eine physikalische Manipulation des die sicherheitsrelevanten Daten enthaltenden Gegenstandes ausgeschlossen ist. Hierdurch ist es wesentlich schwerer die sicherheitsrelevanten Daten des Benutzers des Mobiltelefones zu manipulieren.

Zudem ist eine solche Zahlungsweise für den Benutzer des Mobiltelefons sehr praktisch, insbesondere wenn sie über eine leitungsunabhängige Datenverbindung (z.B. Infrarotverbindung oder Funkverbindung) erfolgt, da der Benutzer lediglich an seinem Mobiltelefon den Kauf bestätigen muß. Eine entsprechende Zahlungsbestätigung wird gemäß dem erfindungsgemäßen Verfahren nach Anspruch 9 vom Mobiltelefon über die vom Telefonnetzwerk unabhängige Datenverbindung abgesetzt und von der Zahlungsausführungsvorrichtung empfangen. Die Zahlungsausführungsvorrichtung kann mit dieser Zahlungsbestätigung den Zahlungsvorgang abschließen, wobei sie beispielsweise von einer Abrechnungsstelle eine Autorisierungsnachricht zur Durchführung der Zahlung anfordert.

Ein weiterer wesentlicher Vorteil des erfindungsgemäßen Verfahrens ist, daß ein Mobiltelefon über das Telefonnetzwerk jederzeit gesperrt werden kann. Bei Verlust des Mobiltelefons können somit sehr schnell unerlaubte Zahlungen durch Dritte mittels des Mobiltelefons verhindert werden, indem alleine das Mobiltelefon gesperrt wird. Bei einer verlorenen Kredit- oder Scheckkarte müssen alle in Frage kommenden Autorisierungsstellen, die eine entsprechende Kredit- oder Scheckkartenzahlung autorisieren können, informiert werden. Oftmals führen die Geschäfte die Autorisierung mittels Sperrlisten selbst durch, so daß bei einer verlorenen Kreditkarte oder Scheckkarte all diese Geschäfte hierüber informiert werden müssen. Demgegenüber stellt die Verwendung des Mobiltelefons als bargeldloses Zahlungsmittel eine wesentliche Verbesserung der Sperrmöglichkeit bei Verlust dar, da die Sperrung sofort am Zahlungsmittel selbst ausgeführt werden kann. Hierdurch können Schaden auf Seiten des Benutzers sowie auf Seiten der Abbuchungsstelle, von der die bargeldlose Zahlung abgebucht wird, verhindert werden.

Vorteilhafte Ausgestaltungen der Erfindung sind in den Unteransprüchen angegeben.

Die Erfindung wird nachfolgend beispielhaft näher anhand der Zeichnungen erläutert. Diese zeigen:
- Fig. 1: schematisch ein erfindungsgemäßes System mit einer Zahlungsausführungsvorrichtung und einem Mobiltelefon in einem Blockschaltbild,
- Fig. 2 bis 7: schematisch vereinfacht den Datentransfer im erfindungsgemäßen System gemäß den verschiedenen Abwandlungen des Verfahrens zum Ausführen einer bargeldlosen Zahlung.

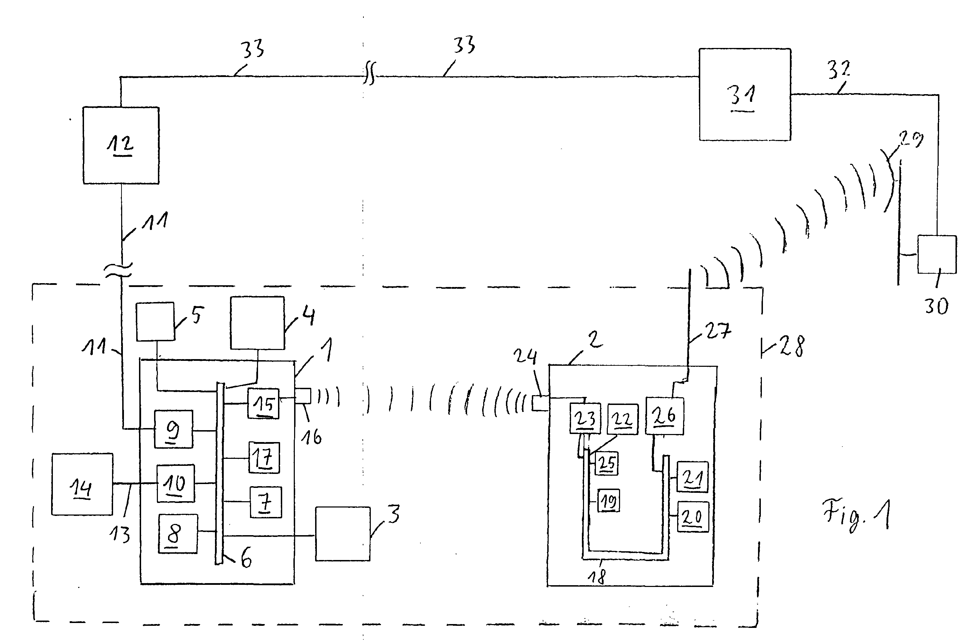

Fig. 1 zeigt schematisch den Aufbau eines erfindungsgemäßen Systems zum Ausführen einer bargeldlosen Zahlung. Das System umfaßt eine Zahlungsausführungsvorrichtung 1 und ein Mobiltelefon 2.

Die Zahlungsausführungsvorrichtung 1 ist typischerweise eine Registrierkasse eines Ladengeschäftes mit einer Tastatur 3, Anzeige 4 und einem Belegdrucker 5. Die Tastatur 3, Anzeige 4 und der Belegdrucker 5 sind über einen Datenbus 6 miteinander verbunden. Am Datenbus ist eine Prozessoreinheit 7 und eine Speichereinheit 8 angeschlossen. Ferner können am Datenbus Schnittstelleneinrichtungen 9, 10 angeschlossen sein, mit denen eine Datenverbindung über eine Datenleitung 11 zu einer Abrechnungsstelle 12 bzw. über eine Datenleitung 13 zu einem Warenwirtschaftssystem 14 hergestellt werden kann.

Die erfindungsgemäße Zahlungsausführungsvorrichtung weist eine Treibereinrichtung 15 für eine Sende-/Empfangseinrichtung 16 auf, die eine Schnittstelle zur Kommunikation mit dem Mobiltelefon 2 bilden. Die Treibereinrichtung 15 ist mit dem Datenbus 6 verbunden. Die Sende-/Empfangseinrichtung ist z.B. ein Infrarotsender/-Empfänger, der Infrarotsignale aussenden und empfangen kann. Für die Erfindung ist auch jede andere Sende-/Empfangseinrichtung geeignet, die zum lokalen Übertragen von Daten geeignet ist. Grundsätzlich ist es auch möglich, anstelle einer drahtlosen Datenverbindung eine zum Mobiltelefon 2 führenden Datenleitung vorzusehen, die beispielsweise mit einem Stecker am Mobiltelefon eingesteckt werden kann. Für die Erfindung wird jedoch eine drahtlose Datenverbindung, wie z.B. eine Infrarot-Datenverbindung oder eine Bluetooth-Datenverbindung, bevorzugt, da sie wesentlich einfacher handhabbar ist.

Die Treibereinrichtung 15 dient zum Umsetzen der über den Datenbus 6 erhaltenen digitalen Signale in entsprechende Analogsignale zum Ausgeben über die Sende/Empfangseinrichtung 16 bzw. zum Umsetzen der von der Sende/Empfangseinrichtung 16 empfangenen analogen Signale in entsprechende digitale Signale, die dann an den Datenbus 6 weitergeleitet werden.

An den Datenbus ist eine Codier-/Decodiereinrichtung 17 angeschlossen, mit welcher Nachrichten ver- und entschlüsselt werden können. Zum Verschlüssen können geheime sowie öffentliche Schlüssel verwendet werden. Diese Codier/Decodiereinrichtung 17 kann auch zum Überprüfen, ob eine Nachricht vollständig angekommen ist, oder ob sie manipuliert worden ist, verwendet werden. Hierzu sind unterschiedliche Verfahren bekannt, die z.B. mit Prüfsummen ermiteln und auswerten. Eine solche Codier-/Decodiereinrichtung 17 fungiert für die an der Zahlungsausführungsvorrichtung eingehenden Nachrichten als Verifiziereinrichtung, die die Nachrichten auf ihre Echtheit, Richtigkeit und/oder Vollständigkeit verifiziert.

Das Mobiltelefon 2 besitzt einen Datenbus 18, eine Prozessoreinheit 19, eine Speichereinheit 20, eine Tastatur 21 und eine Anzeige 22. An den Datenbus 18 ist eine Treibereinrichtung 23 zum Treiben einer Sende-/Empfangseinrichtung 24 angeschlossen. Die Treibereinrichtung 23 und Sende-/Empfangseinrichtung 24 entsprechen in der Funktion der Treibereinrichtung 15 und Sende-/Empfangseinrichtung 16 der Zahlungsausführungsvorrichtung 1 und sind zu diesen kompatibel, so daß von der Sende-/Empfangseinrichtung 24 des Mobiltelefons 2 Signale an die Sende/Empfangseinrichtung 16 der Zahlungsausführungsvorrichtung 1 gesandt bzw. von dieser empfangen werden können.

Das Mobiltelefon 2 weist wiederum eine Codier-/Decodiereinrichtung 25 auf, mit der die an die Treibereinrichtung 23 übermittelten oder von dieser empfangenen Signale codiert bzw. decodiert werden können. Diese Codier-/Decodiereinrichtung 25 arbeitet ähnlich wie die Codier-/Decodiereinrichtung 17 der Zahlungsausführungsvorrichtung 1, wobei sie insbesonder mit einer Signierfunktion zum Erstellen einer digitalen Signatur des Benutzers des Mobiltelefons 2 versehen ist. Diese Codier/Decodiereinrichtung 25 stellt daher eine Signiereinrichtung dar.

Am Datenbus 18 des Mobiltelefons 2 ist eine HF-Treibereinrichtung 26 angeschlossen, mit welcher die Telefonsignale über eine Antenne 27 vom Mobiltelefon 2 gesendet bzw. empfangen werden können.

Die über die Sende-/Empfangseinrichtung 16, 24 ausgebildete Datenverbindung erlaubt die lokale Übertragung von Daten zwischen dem Mobiltelefon 2 und der Zahlungsausführungsvorrichtung 1. Sie ist unabhängig vom Telefonnetzwerk und kann deshalb auch innerhalb eines Gebäuderaumes, in dem sich die Zahlungsausführungsvorrichtung 1 und ein entsprechendes Mobiltelefon 2 befindet und keine Verbindung zum Telefonnetz möglich ist, hergestellt werden. Üblicherweise sind die Räume, in denen Zahlungsausführungsvorrichtungen 1 angeordnet sind, Geschäftslokale 28. Ein solches Geschäftslokal 28 ist in Fig. 1 durch den gestrichelten Rahmen 28 dargestellt.

Das Mobiltelefon kann eine Funkverbindung über die HF-Treibereinrichtung 26 und die Antenne 27 zu einem Telefonnetzwerk herstellen. Das Telefonnetzwerk ist in Fig. 1 schematisch durch eine Antenne 29, eine der Antenne 29 zugeordnete Empfängerstation 30, eine von der Empfängerstation 30 zu einem Netzbetreiber 31 führende Telefonleitung 32 dargestellt.

Die Abrechnungsstelle 12 kann über eine Datenleitung 33 mit dem Netzbetreiber 31 verbunden sein.

Die Datenleitungen 11 und 33 sind vorzugsweise gesicherte Datenleitungen, wie z.B. Standleitungen, auf welche Dritte nicht zugreifen können. Bei der heutzutage fortschreitenden Entwicklung in der Kryptografie ist es grundsätzlich auch möglich, die Sicherheit der Datenübertragung durch kryptografische Verfahren zu gewährleisten, so daß grundsätzlich auch eine offene Netzverbindung als Datenleitung 11, 33 verwendet werden kann, in der die Datenströme von Dritten gelesen werden können, wobei dann durch kryptografische Verfahren sichergestellt wird, daß Dritte die Datenströme nicht verstehen können.

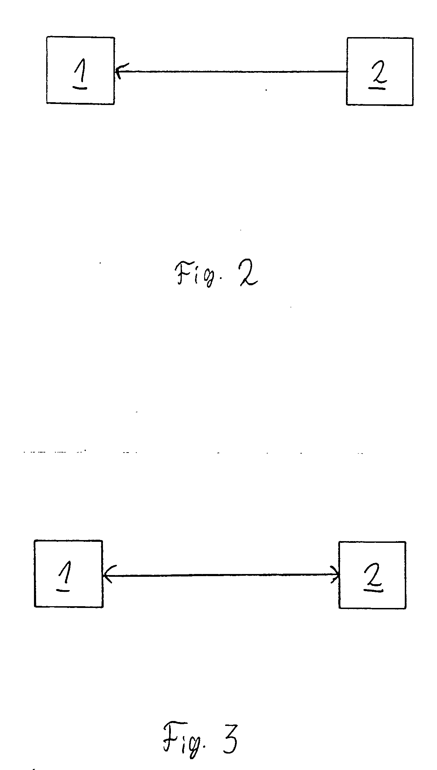

Nachfolgend werden anhand der Fig. 2 bis 7 unterschiedliche Anwendungsformen des in Fig. 1 gezeigten Systems erläutert.

Gemäß der Anwendungsform nach Fig. 2 wird zum Ausführen einer Zahlung lediglich eine Einweg-Datenverbindung vom Mobiltelefon 2 zur Zahlungsausführungsvorrichtung 1 aufgebaut. Der Zahlvorgang läuft hierbei folgendermaßen ab:

In einem Geschäft wird der Benutzer des Mobiltelefons 2 mündlich von einem die Zahlungsausführungsvorrichtung bedienenden Kassier zur Zahlung eines bestimmten Betrages aufgefordert. Der Benutzer des Mobiltelefons gibt eine entsprechende Zahlungsbestätigung an der Tastatur seines Mobiltelefons ein und sendet diese Zahlungsbestätigung über die telefonnetzunabhängige lokale Datenverbindung zur Zahlungsausführungsvorrichtung. Die Zahlungsbestätigung wird vor dem Versenden mittels der Codier-/Decodiereinrichtung 25 des Mobiltelefons 2 codiert, dann über die Treibereinrichtung 23 von der Sende-/Empfangseinrichtung 24 an die Zahlungsausführungsvorrichtung 1 gesandt. Diese empfängt das Signal mittels ihrer Sende/Empfangseinrichtung 16 und der Treibereinrichtung 15 und decodiert das Signal mit seiner Codier-/Decodiereinrichtung. Das Zahlungsbestätigungssignal enthält z.B. eine Identifikationsinformation, die den Inhaber des Mobiltelefons 2 identifiziert und Informationen über die Abrechnungsstelle. Diese Informationen sind kritische Informationen, weshalb sie im Mobiltelefon entweder als Schlüssel oder verschlüsselt gespeichert sind. Die Information über den Inhaber des Mobiltelefons 2 wird z.B. in Form einer elektronischen Signatur dargestellt.

Die mit dem Zahlungsbestätigungssignal übertragenen Informationen werden mittels der Codier-/Decodiereinrichtung 17 in der Zahlungsausführungsvorrichtung 1 decodiert und verifiziert. Anhand der Identifikationsinformationen wird der Geschäftspartner identifiziert und anhand der Informationen über die Abrechnungsstelle wird ermittelt, von wem das Geld abgebucht werden kann. Die Abbuchungsstelle kann eine beliebige Gesellschaft sein, die z.B. mittels eines Lastschriftverfahrens das Konto des Benutzers des Mobiltelefons 2 mit dem entsprechenden Betrag belastet. Es ist jedoch auch möglich, daß die Abrechnungsstelle eine Bank oder ein Kreditkarteninstitut ist, das ein entsprechendes Konto belastet. Als Abbuchungsstelle kann auch der Netzbetreiber des Telefonnetzes, zu dem das Mobiltelefon 2 gehört, fungieren, der beispielsweise den zu zahlenden Betrag auf seine Telefonrechnung an den Benutzer setzt. Der Abbuchungsvorgang mit der Abrechnungsstelle kann unabhängig von der eigentlichen Zahlungsbestätigung erfolgen. Es kann z.B. zweckmäßig sein, alle Zahlungen eines Tages in der Speichereinheit 8 der Zahlungsausführungsvorrichtung 1 zu speichern und nach Geschäftsschluß diese an die Abrechnungsstelle zu übermitteln. Dies kann mittels einer Datenverbindung online aber auch mittels Datenträger offline ausgeführt werden.

Zur Überprüfung der Zahlungsfähigkeit des Benutzers des Mobiltelefons 2 kann in der Speichereinheit 8 der Zahlungsausführungsvorrichtung eine Sperrliste hinterlegt sein, anhand der geprüft werden kann, welche Mobiltelefonbenutzer nicht im ausreichenden Maße zahlungsfähig sind. Sollte eine solche Prüfung keine ausreichende Zahlungsfähigkeit ergeben, wird dies an der Anzeige 4 der Zahlungsausführungsvorrichtung 1 angezeigt, so daß der Kassier den Zahlungsvorgang abbrechen kann.

Diese Ausführungsform zeigt, daß zum Ausführen der Zahlung lediglich eine Datenverbindung in eine einzige Richtung vom Mobiltelefon 2 zur Zahlungsausführungsvorrichtung 1 notwendig ist. Eine solche Ausführungsform hat für den Benutzer des Mobiltelefons 2 den Vorteil, daß eine Manipulation an den im Mobiltelefon 2 gespeicherten sicherheitsrelevanten Daten (Identifikationsinformationen, Informationen über die Abbuchungsstelle) absolut ausgeschlossen ist. Die Datenverbindungen zwischen der Zahlungsausführungsvorrichtung 1 und der Abbuchungsstelle 12 bzw. zwischen dem Mobiltelefon 2 und dem Netzbetreiber 31 werden während des Zahlvorgangs zwischen dem Benutzer des Mobiltelefons 2 und dem Kassierer nicht benutzt. Über diese Datenverbindung können die entsprechenden Daten zu einem späteren Zeitpunkt ausgetauscht werden. So können z.B. die Schlüssel für die digitale Signatur des Benutzers des Mobiltelefons 2 in regelmäßigen Abständen über das Telefonnetzwerk mit dem Netzbetreiber 31 ausgetauscht werden.

Diese Schlüssel können geheime Schlüssel sein, die vom Netzbetreiber 31 an das Mobiltelefon 2 und die Zahlungsausführungsvorrichtung 1 in regelmäßigen Abständen weitergegeben werden, so daß die entsprechenden Nachrichten jederzeit korrekt ver- und entschlüsselt werden können. Die Schlüssel können aber auch öffentliche Schlüssel (public key) sein, die in regelmäßigen Abständen im Mobiltelefon 2 in der Codier-/Decodiereinrichtung 25 erzeugt und über das Telefonnetzwerk und dem Netzbetreiber 31 an die entsprechenden Zahlungsausführungsvorrichtungen weitergegeben werden.

Fig. 3 zeigt eine Anwendungsform, bei der die Datenverbindung zwischen der Zahlungsausführungsvorrichtung 1 und dem Mobiltelefon 2 bidirektionell ausgeführt ist, so daß sowohl von der Zahlungsausführungsvorrichtung 1 zum Mobiltelefon 2 als auch vom Mobiltelefon 2 zur Zahlungsausführungsvorrichtung 1 Daten übertragen werden. Diese Anwendungsform unterscheidet sich von der nach Fig. 2 dadurch, daß der Kassier zunächst den zu zahlenden Betrag an der Tastatur 3 der Zahlungsausführungsvorrichtung 1 eingibt, und auf eine entsprechende Bestätigung des Kassiers eine Zahlungsaufforderung von der Zahlungsausführungsvorrichtung 1 an das Mobiltelefon 2 gesendet wird. Die Zahlungsaufforderung enthält z.B. die Informationen über den zu zahlenden Betrag und evtl. auch noch Informationen über den hiermit zu kaufenden Artikel. Der Benutzer des Mobiltelefons 2 kann diese Zahlungsaufforderung an der Anzeige 22 des Mobiltelefons 2 lesen und mit einer entsprechenden Eingabe bestätigen. Hierdurch löst er die Absendung einer Zahlungsbestätigung aus, die genauso wie bei der anhand von Fig. 2 beschriebenen Anwendungsform an die Zahlungsausführungsvorrichtung 1 gesendet wird. Im übrigen ist das Verfahren zu der obigen Anwendungsform identisch.

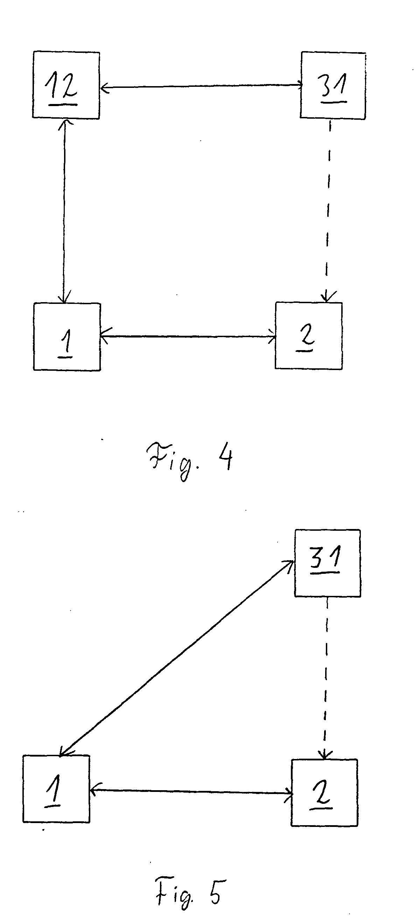

Bei der Anwendungsform nach Fig. 4 wird folgende Verfahrensschritte aufeinanderfolgend ausgeführt:
- Von der Zahlungsausführungsvorrichtung 1 wird eine Zahlungsaufforderung an das Mobiltelefon 2 gesendet.
- Am Mobiltelefon 2 gibt der Benutzer eine Bestätigung an der Tastatur 21 ein.
- Auf die Bestätigung des Benutzers wird eine Zahlungsbestätigung vom Mobiltelefon 2 an die Zahlungsausführungsvorrichtung 1 gesendet.
- Die Zahlungsausführungsvorrichtung 1 sendet eine Autorisierungsanfrage an die Abrechnungsstelle 12.
- Die Autorisierungsanfrage wird von der Abrechnungsstelle 12 an den Netzbetreiber 31 weitergeleitet.
- Der Netzbetreiber, der aufgrund des Zahlungseinganges zu den Telefonrechnungen für das Mobiltelefon 2 die Zahlungsfähigkeit des Benutzers des Mobiltelefons 2 kennt, sendet eine entsprechende Autorisierungsantwort an die Abrechnungsstelle 12.
- Von der Abrechnungsstelle 12 wird die Autorisierungsantwort an die Zahlungsausführungsvorrichtung 1 weitergeleitet.
- In der Zahlungsausführungsvorrichtung 1 wird anhand der Autorisierungsantwort entschieden, ob die Zahlung ausgeführt wird oder nicht.
- Soll die Zahlung ausgeführt werden, wird ein Zahlungsbeleg von der Zahlungsausführungsvorrichtung 1 an das Mobiltelefon 2 gesendet, wodurch dem Benutzer des Mobiltelefons 2 der Abschluß der Zahlung bestätigt wird. Soll der Zahlungsvorgang nicht ausgeführt werden, so wird er von der Zahlungsausführungsvorrichtung 1 abgebrochen.

Bei diesem Verfahren muß weder die Zahlungsausführungsvorrichtung 1 noch die Abrechnungsstelle 12 die vom Mobiltelefon 2 verschlüsselt übertragene Zahlungsbestätigung auswerten. Dies bedeutet, daß lediglich beim Netzbetreiber 31 und im Mobiltelefon 2 die entsprechenden Schlüssel zum Decodieren der Nachrichten hinterlegt sein müssen. Hierdurch ist es besonders einfach geheime Schlüssel zu verwenden, die nur an zwei Orten, nämlich beim Netzbetreiber 31 und im Mobiltelefon 2 hinterlegt sind und deshalb sehr einfach regelmäßig durch neue Schlüssel ersetzt werden können. Zudem können die beim Netzbetreiber ohnehin vorhandenen Informationen über die Zahlungswürdigkeit des Benutzers des Mobiltelefons 2 genutzt werden.

Falls aus Datenschutzgründen eine Überprüfung der Zahlungsfähigkeit des Benutzers des Mobiltelefons 2 beim Netzbetreiber nicht gewünscht sein sollte, kann das obige Verfahren dahingehend abgewandelt werden, daß der Netzbetreiber 31 lediglich die in der Autorisierungsanfrage enthaltenden Identifikationsinformationen entschlüsselt und an die Abbuchungsstelle weiterleitet, die dann die Bewertung der Zahlungsfähigkeit des entsprechenden Benutzers vornimmt.

Dieses Verfahren kann jedoch auch dahingehend abgewandelt werden, daß die Autorisierungsanfrage lediglich von der Zahlungsausführungsvorrichtung an die Abrechnungsstelle 12 weitergeleitet wird, bei der in regelmäßigen Abständen die entsprechenden digitalen Schlüssel vom Netzwerkbetreiber 31 hinterlegt werden, so daß die Abrechnungsstelle selbständig die Autorisierungsanfrage auswerten und eine entsprechende Autorisierungsantwort erstellen kann.

Die strichlinierte Datenverbindung zwischen dem Netzwerkbetreiber 31 und dem Mobiltelefon 2 in Fig. 4 stellt die in regelmäßigen Abständen unabhängig von einem Zahlungsvorgang in Anspruch genommene Datenverbindung über das Telefonnetzwerk dar, mit welcher die digitalen Schlüssel im Mobiltelefon 2 und beim Netzwerkbetreiber 31 erneuert werden.

Da zwischen der Zahlungsausführungsvorrichtung 1 und der Abrechnungsstelle 12 und dem Netzwerkbetreiber 31 geheim zu haltende Daten übermittelt werden, wird hier vorzugsweise eine gesicherte Datenverbindung verwendet.

Der von der Zahlungsausführungsvorrichtung 1 an das Mobiltelefon 2 gesendete Zahlungsbeleg kann im Rahmen der Erfindung auch weggelassen werden. Anstelle eines solchen Zahlungsbeleges kann beispielsweise mit dem Belegdrucker 5 ein Zahlungsbeleg ausgedruckt werden, und wie bei einer herkömmlichen Bargeldzahlung dem Käufer, das heißt dem Benutzer des Mobiltelefons 2 übergeben werden. Wird jedoch der Zahlungsbeleg an das Mobiltelefon 2 übertragen, so kann im Mobiltelefon 2 der Zahlungsbeleg in der Speichereinheit 20 abgespeichert werden, so daß dem Benutzer des Mobiltelefons in seinem Mobiltelefon eine Aufstellung über die von ihm getätigten Zahlungen besitzt.

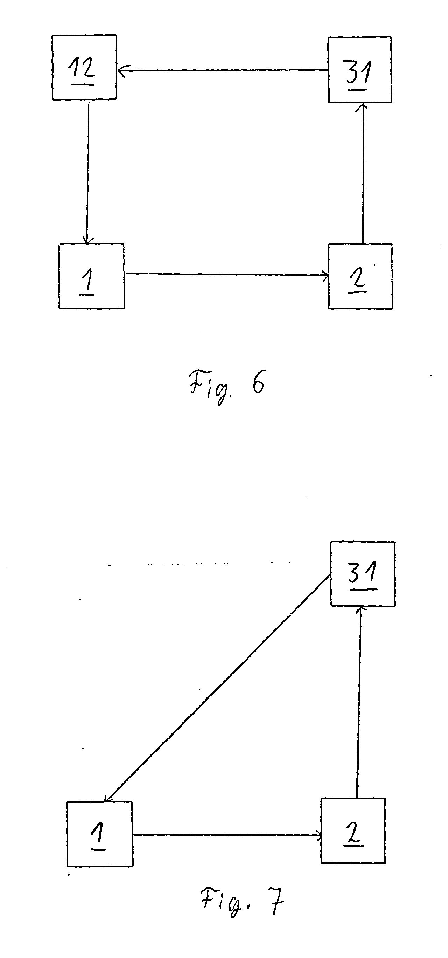

Fig. 5 zeigt eine Anwendungsform, bei der eine direkte Datenverbindung zwischen der Zahlungsausführungsvorrichtung 1 und dem Netzwerkbetreiber 31 besteht. Bei dieser Anwendungsform übernimmt der Netzwerkbetreiber 31 alle Funktionen der Abbuchungsstelle, wobei er auf eine Autorisierungsanfrage der Zahlungsausführungsvorrichtung 1 eine entsprechende Autorisierungsantwort erzeugt und diese an die Zahlungsausführungsvorrichtung sendet. Die Abbuchung des entsprechenden Kaufpreises erfolgt über die regelmäßig an den Benutzer 2 des Mobiltelefons gestellte Telefonrechnung. Im übrigen entspricht das Verfahren demjenigen das anhand von Fig. 4 oben beschrieben ist.

Eine weitere Anwendungsform ist in Fig. 6 dargestellt, bei der folgende Verfahrensschritte aufeinanderfolgend ausgeführt werden:
- Die Zahlungsausführungsvorrichtung 1 sendet eine Zahlungsaufforderung an das Mobiltelefon 2.
- Am Mobiltelefon 2 bestätigt der Benutzer die Zahlung durch eine entsprechende Eingabe an der Tastatur des Mobiltelefons.
- Eine Zahlungsbestätigung wird vom Mobiltelefon 2 an den Netzbetreiber 31 gesendet. Diese Zahlungsbestätigung enthält alle zur Ausführung der Zahlung notwendigen Informationen, wie den zu zahlenden Betrag, eine Identifikationsinformation des die Zahlungsausführungsvorrichtung betreibenden Händlers und eine Identifikationsinformation des Benutzers des Mobiltelefons 2, beispielsweise in Form einer elektronischen Signatur.
- Anhand der Zahlungsbestätigung kann der Netzwerkbetreiber 31 eine Zahlungsnachricht erzeugen, in der die Zahlungsfähigkeit des Benutzers des Mobiltelefons und die weiteren für die Zahlung relevanten Informationen enthalten sind.
- Diese Zahlungsnachricht wird vom Netzbetreiber 31 an die Abbuchungsstelle 12 gesendet. An der Abbuchungsstelle 12 werden anhand der übermittelten Identifikationsinformationen der Käufer und Verkäufer identifiziert und die entsprechenden Buchungsvorgänge vorgenommen und eine endgültige Zahlungsbestätigung an die Zahlungsausführungsvorrichtung 1 gesendet.
- Durch den Empfang der endgültigen Zahlungsbestätigung erkennt die Zahlungsausführungsvorrichtung, daß die Zahlung ausgeführt worden ist, wodurch sie den Zahlungsvorgang abschließen kann.

Bei dieser Ausführungsform ist vorteilhaft, daß die Identifikationsinformationen des Benutzers des Mobiltelefons 2 nicht an die Zahlungsausführungsvorrichtung 1 weitergegeben werden müssen, sondern lediglich an den Netzbetreiber 31 und die Abbuchungsstelle 12 übermittelt werden. Hierdurch ist eine Manipulation durch den die Zahlungsausführungsvorrichtung betreibenden Händler sicher vermieden. Nachteilig bei diesem Verfahren gegenüber dem oben beschriebenen Verfahren ist, daß bei jedem einzelnen Zahlungsvorgang eine Telefonverbindung zwischen dem Mobiltelefon 2 und dem Netzbetreiber 31 hergestellt werden muß, was bei einer Zahlung innerhalb eines geschlossenen Raumes oftmals problematisch sein kann. Dieses Problem kann aber durch Anordnen einer Antenne des Telefonnetzwerkes im Geschäftslokal beseitigt werden, wodurch eine stabile Verbindung vom Mobiltelefon zum Telefonnetzwerk gewährleistet wird.

Die in Fig. 7 gezeigt Anwendungsform entspricht derjenigen aus Fig. 6, wobei hier der Netzbetreiber 31 wiederum die Funktion der Abbuchungsstelle 12 übernimmt, so daß eine direkte Datenverbindung vom Netzbetreiber 31 zur Zahlungsausführungsvorrichtung 1 vorgesehen ist. Bei dieser Anwendungsform führt der Netzbetreiber 31 sowohl die Autorisierung als auch die Abbuchung des zu zahlenden Betrags, beispielsweise auf der Telefonrechnung des Benutzers des Mobiltelefons 2, aus. Der Netzbetreiber erzeugt deshalb auch die endgültige Zahlungsbestätigung, die an die Zahlungsausführungsvorrichtung 1 gesendet wird.

Bei den oben beschriebenen Ausführungsformen wird die Zahlung jeweils vom Benutzer durch eine Eingabe an der Tastatur des Mobiltelefons 2 bestätigt. Die Zahlungsbestätigung kann auch auf andere Weise erfolgen, indem z.B. ein Fingerabdruck oder die Iris des Benutzers am Mobiltelefon elektrisch abgetastet werden. Die hierbei gewonnenen Daten können unmittelbar zur elektronischen Signatur der Zahlungsbestätigung verwendet werden.

Die obigen Anwendungsformen besitzen alle als gemeinsames Prinzip eine lokale, vom Telefonnetz unabhängige Datenverbindung zwischen der Zahlungsausführungsvorrichtung und dem Mobiltelefon. Diese lokale Datenverbindung zum Ausführen einer bargeldlosen Zahlung stellt ein wesentliches Prinzip der vorliegenden Erfindung dar, denn hierdurch wird es erstmals möglich, in einem beliebigen Geschäftslokal, in dem eine erfindungsgemäße Zahlungsausführungsvorrichtung angeordnet ist, die Zahlung mittels eines Mobiltelefons zu bestätigen. Dies bedeutet für den Benutzer des Mobiltelefons eine wesentliche Steigerung der Sicherheit bei der Zahlung, da keinerlei Hardware wie z.B. Kredit- oder Chipkarten, dem Geschäftspartner übergeben werden muß, sondern lediglich eine Datenverbindung aufgebaut wird, und die Zahlungsfunktion des Mobiltelefons jederzeit über das Telefonnetzwerk gesperrt werden kann. Zudem erlaubt die Erfindung den Einsatz eines beliebigen Abbuchungsverfahrens, sei es mittels Kreditkarte, einer im Mobiltelefon integrierten Geldkarte, Scheckkarte, Lastschriftverfahren vom Konto oder Belastung der Telefonrechnung. Diese Vielfalt der Abbuchungsverfahren wird dadurch ermöglicht, daß die Abbuchung an einer beliebigen Stelle unabhängig von der Zahlungsausführungsvorrichtung und unabhängig vom Mobiltelefon erfolgen kann. Hierdurch wird die technische Grundlage geschaffen, daß beliebige Finanzgesellschaften oder auch andere Gesellschaften eine entsprechende Abbuchungsdienstleistung anbieten können.

Eine typische Anwendung der Erfindung kann bspw. auch das Ausführen von Zahlungen an Automaten zum Ausgeben von Fahrkarten oder sonstigen Waren sein. An einem mit der erfindungsgemäßen Zahlungsausführungsvorrichtung ausgestatteten Automaten kann man dann die gewünschte Fahrkarte bzw. die gewünschte Ware in herkömmlicher Art und Weise auswählen, wobei die Zahlung über die Datenkommunikation zwischen der im Automaten integrierten Zahlungsausführungsvorrichtung und einem Mobiltelefon in einer der oben beschriebenen Weisen erfolgt. Der Benutzer muß hierdurch die Zahlung lediglich am Mobiltelefon bestätigen und bekommt dann die von ihm gewünschte Fahrkarte bzw. die von ihm gewünschte Ware vom Automaten ausgegeben. Er muß weder Kleingeld noch irgendeine Kredit-, Scheck-oder Geldkarte in den Automaten eingeben. Diese Ausführungsform zeigt, daß die erfindungsgemäße Zahlungsausführungsvorrichtung auch vollautomatisch den Zahlungsvorgang ausführen kann.

### Bezugszeichenliste

- 1: Zahlungsausführungsvorrichtung
- 2: Mobiltelefon
- 3: Tastatur
- 4: Anzeige
- 5: Belegdrucker
- 6: Datenbus
- 7: Prozessoreinheit
- 8: Speichereinheit
- 9: Schnittstelleneinrichtung
- 10: Schnittstelleneinrichtung
- 11: Datenleitung
- 12: Abbuchunasstelle
- 13: Datenleitung
- 14: Warenwirtschaftssystem
- 15: Treibereinrichtung
- 16: Sende-/Empfangseinrichtung
- 17: Codier-/Decodiereinrichtung
- 18: Datenbus
- 19: Prozessoreinheit
- 20: Speichereinheit
- 21: Tastatur
- 22: Anzeige
- 23: Treibereinrichtung
- 24: Sende-/Empfangseinrichtung
- 25: Codier-/Decodiereinrichtung
- 26: HF-Treibereinrichtung
- 27: Antenne
- 28: Geschäftslokal
- 29: Antenne
- 30: Empfangsstation
- 31: Netzbetreiber
- 32: Telefonleitung
- 33: Datenleitung

## Patentansprüche

1. Zahlungsausführungsvorrichtung zur bargeldlosen Zahlung mit einer Einrichtung (8) zum Zwischenspeichern von Zahlungsinformationen, einer Schnittstelle (15, 16) zur Kommunikation mit einem Mobiltelefon (2) zum Ausführen eines Zahlungsvorganges auf Grundlage der gespeicherten Zahlungsinformationen.

2. Zahlungsausführungsvorrichtung nach Anspruch 1,
**dadurch gekennzeichnet,**
daß die Schnittstelle (15, 16) für eine leitungsunabhängige Kommunikation mit dem Mobiltelefon, wie z.B. als Infrarot-Schnittstelle oder als Funkschnittstelle, ausgebildet ist.

3. Zahlungsausführungsvorrichtung nach Anspruch 1 oder 2,
**gekennzeichnet durch**
eine Verifiziereinrichtung (17) zum Verifizieren eines vom Mobiltelefon (2) empfangenen Zahlungsbestätigungssignals, wie z.B. eines kryptographischen Signals, auf Grundlage dessen die Zahlung des zu zahlenden Betrags von bspw. einer Abrechnungsstelle (12) autorisiert werden kann.

4. Zahlungsausführungsvorrichtung nach einem der Ansprüche 1 bis 3,
**gekennzeichnet durch**
eine Einrichtung (7, 15, 16, 17) zum Senden einer die Zahlungsinformationen enthaltenden Zahlungsaufforderung.

5. Zahlungsausführungsvorrichtung nach einem der Ansprüche 1 bis 4,
**gekennzeichnet durch**
eine Datenverbindung (11) zu einem Abrechnungssystem (12) zum Ausführen eines Autorisierungsvorganges.

6. Zahlungsausführungsvorrichtung nach einem der Ansprüche 1 bis 6,
**dadurch gekennzeichnet,**
daß die Zahlungsausführungsvorrichtung (1) eine Registrierkasse oder Bestandteil eines Warenabgabeautomaten ist.

7. Mobiltelefon zum Bestätigen einer bargeldlosen Zahlung mit
einer Signiereinrichtung (25), mit welcher ein digitales Zahlungsbestätigungssignal kryptographisch codiert werden kann,
einer telefonnetzunabhängigen Schnittstelle (23, 24) zum Kommunizieren mit einer Zahlungsausführungsvorrichtung (1), um das Zahlungsbestätigungssignal über diese Schnittstelle (23, 24) an die Zahlungsausführungsvorrichtung zu übertragen.

8. Mobiltelefon nach Anspruch 7,
**dadurch gekennzeichnet,**
daß die Schnittstelle (23, 24) für eine leitungsunabhängige Kommunikation mit der Zahlungsausführungsvorrichtung (1), wie z.B. als Infrarot-Schnittstelle oder als Funkschnittstelle, ausgebildet ist.

9. Verfahren zum Ausführen einer bargeldlosen Zahlung, bei welchem eine Zahlungsbestätigung von einem Mobiltelefon über eine vom Telefonnetzwerk unabhängige Datenverbindung (15, 16, 23, 24) abgesetzt und von einer Zahlungsausführungsvorrichtung empfangen wird.

10. Verfahren zum Ausführen einer bargeldlosen Zahlung nach Anspruch 9,
**dadurch gekennzeichnet,**
daß eine nach einem der Ansprüche 1 bis 6 ausgebildete Zahlungsausführungsvorrichtung (1) verwendet wird.

11. Verfahren zum Ausführen einer bargeldlosen Zahlung nach Anspruch 9 oder 10,
**dadurch gekennzeichnet,**
daß vor dem Absetzen der Zahlungsbestätigung eine Zahlungsaufforderung von der Zahlungsausführungsvorrichtung (1) an das Mobiltelefon (2) gesendet wird.

12. Verfahren zum Ausführen einer bargeldlosen Zahlung nach einem der Ansprüche 9 bis 11,
**dadurch gekennzeichnet,**
daß die Zahlungsausführungsvorrichtung (1) nach dem Empfang der Zahlungsbestätigung eine Autorisierungsanfrage an eine Abrechnungsstelle (12) sendet, und diese eine Autorisierungsantwort an die Zahlungsausführungsvorrichtung (1) sendet, mit welcher die Zahlungsausführungsvorrichtung (1) zum Ausführen der Zahlung autorisiert werden kann.

13. Verfahren zum Ausführen einer bargeldlosen Zahlung nach Anspruch 12,
**dadurch gekennzeichnet,**
daß die Abrechnungsstelle (12) nach dem Empfang einer Autorisierungsanfrage von der Zahlungsausführungsvorrichtung (1) eine weitere Autorisierungsanfrage an einen Netzbetreiber (31) sendet, der das Telefonnetz betreibt, an dem das Mobiltelefon (2) angeschlossen ist, und der Netzbetreiber (31) auf die Autorisierungsanfrage eine entsprechende Autorisierungsantwort an die Abrechnungsstelle (12) sendet.

14. Verfahren zum Ausführen einer bargeldlosen Zahlung nach Anspruch 12,
**dadurch gekennzeichnet,**
daß die Abrechnungsstelle (12) von einem Netzbetreiber (31), der das Telefonnetz betreibt, an dem das Mobiltelefon (2) angeschlossen ist, regelmäßig Autorisierungsinformationen erhält, die zumindest Identifikationsinformationen zu den Mobiltelefonen (2) enthalten.

15. Verfahren zum Ausführen einer bargeldlosen Zahlung nach einem der Ansprüche 9 bis 14,
**dadurch gekennzeichnet,**
daß die Zahlungsausführungsvorrichtung (1) von einem Netzbetreiber (31), der das Telefonnetz betreibt, an dem das Mobiltelefon (2) angeschlossen ist, regelmäßig Autorisierungsinformationen erhält, die zumindest Identifikationsinformationen zu den Mobiltelefonen enthalten.

16. Verfahren zum Ausführen einer bargeldlosen Zahlung nach einem der Ansprüche 9 bis 15,
**dadurch gekennzeichnet,**
daß die Zahlungsbestätigung eine Identifikationsinformation des Mobiltelefons (2) enthält, die auf einem geheimen Datenschlüssel beruht.

17. Verfahren zum Ausführen einer bargeldlosen Zahlung nach Anspruch 16,
**dadurch gekennzeichnet,**
daß bei einer Autorisierung der Inhaber des Mobiltelefons (2) anhand der ihm zugeordneten Identifikationsinformationen der Zahlungsbestätigung mit Hilfe des Datenschlüssels identifiziert wird.

18. Verfahren zum Ausführen einer bargeldlosen Zahlung, bei welchem eine Zahlungsaufforderung von einer Zahlungsausführungsvorrichtung (1) an ein Mobiltelefon (2) über eine vom Telefonnetzwerk des Mobiltelefons (2) unabhängige Datenverbindung gesendet wird, und
nach Eingabe einer Zahlungsbestätigung eines Benutzers des Mobiltelefons (2) eine Zahlungsbestätigung an den Netzbetreiber des Telefonnetzwerkes über das Telefonnetzwerk gesendet wird, und aufgrund dieser Zahlungsbestätigung eine Autorisierungsnachricht an die Zahlungsausführungsvorrichtung (1) gesendet wird.

19. Verfahren nach Anspruch 18,
**dadurch gekennzeichnet,**
daß der Netzbetreiber (31) den Inhaber des Mobiltelefons (2) anhand der ihm zugeordneten Identifikationsinformationen der Zahlungsbestätigung identifiziert.

20. Verfahren nach Anspruch 17 oder 18,
**dadurch gekennzeichnet,**
daß der Netzbetreiber (31) eine Nachricht an eine Abrechnungsstelle (12) sendet, anhand der die Abrechnungsstelle (12) die Autorisierungsnachricht erzeugt und an die Zahlungsausführungsvorrichtung sendet.

21. Verfahren nach einem der Ansprüche 12 bis 20,
**dadurch gekennzeichnet,**
daß zur Datenübertragung zwischen der Zahlungsausführungsvorrichtung (1) und der Abrechnungsstelle (12), der Abrechnungsstelle (12) und dem Netzbetreiber (31) oder der Zahlungsausführungsvorrichtung (1) und dem Netzbetreiber (31) eine gesicherte Datenverbindung verwendet wird.

22. System zum Ausführen eines Verfahrens nach einem der Ansprüche 13 bis 21, das eine Zahlungsausführungsvorrichtung (1) und ein Mobiltelefon (2) aufweist, und eine vom Telefonnetz des Mobiltelefons unabhängige Datenverbindung zwischen dem Mobiltelefon (2) und der Zahlungsausführungsvorrichtung (1) vorgesehen ist.

23. System nach Anspruch 22,
**dadurch gekennzeichnet,**
daß die Zahlungsausführungsvorrichtung (1) nach einem der Ansprüche 1 bis 6 ausgebildet ist.

24. System nach Anspruch 22 oder 23,
**dadurch gekennzeichnet,**
daß das Mobiltelefon (2) gemäß einem der Ansprüche 7, 8 ausgebildet ist.

25. System nach einem der Ansprüche 22 bis 24,
**dadurch gekennzeichnet,**
daß eine Abrechnungsstelle (12) mit einer gesicherten Datenleitung (11) mit der Zahlungsausführungsvorrichtung (1) verbunden ist.

26. System nach Anspruch 25,
**dadurch gekennzeichnet,**
daß der Netzbetreiber (31) des Telefonnetzes des Mobiltelefons (2) mit einer gesicherten Datenleitung (33) mit der Abrechnungsstelle (12) und/odermit einer gesicherten Datenleitung mit der Zahlungsausführungsvorrichtung (1) verbunden ist.
